# DEMANDE DE BREVET EUROPEEN

(11) **EP 2 911 257 A1**
(43) Date de publication de la demande: **26.08.2015**
(21) Numéro de dépôt: 15151815.6
(22) Date de dépôt: 20.01.2015
(51) Int. Cl.: H02H 9/04, H02H 3/087, H02H 9/02

(54) **DISPOSITIF DE PROTECTION D'UN CIRCUIT CONTRE DES SURTENSIONS ET ALIMENTATION ÉLECTRIQUE COMPRENANT UN TEL DISPOSITIF**

(30) Priorité: 21.01.2014 FR 1450455
(71) Demandeur: MERSEN France SB SAS, 69720 Saint-Bonnet-de-Mure (FR)
(72) Inventeur: Tournier, Dominique, 69009 LYON (FR); De Palma, Gianfranco, 49124 ST BARTHELEMY D'ANJOU (FR)
(74) Mandataire: Myon, Gérard Jean-Pierre

(57) **Abrégé**

Ce dispositif (17) de protection d'un circuit (14) contre des surtensions comprend une résistance non linéaire (18) et une diode Zener (22). La résistance non linéaire (18) est destinée à être connectée aux bornes d'une source d'alimentation électrique (16) du circuit (14). La diode Zener (22) et la résistance non linéaire (18) comprennent chacune une première extrémité de connexion (18a, 22a) et une deuxième extrémité de connexion (18b, 22b). La première extrémité (22a) de la diode Zener (22) est connectée à la première extrémité (18a) de la résistance non linéaire (18). Le dispositif (17) comprend en outre un composant (20) limiteur de courant, propre à limiter l'intensité d'un courant le traversant. Le composant limiteur de courant (20) est connecté entre la deuxième extrémité (18b) de la résistance non linéaire (18) et la deuxième extrémité (22b) de la diode Zener (22).

## Description

La présente invention concerne un dispositif de protection d'un circuit contre des surtensions, c'est à dire un dispositif destiné à écrêter la tension appliquée aux bornes du circuit, et un organe d'alimentation électrique comprenant un tel dispositif.

Un enjeu dans le domaine des circuits électriques est la protection des circuits électriques contre les surtensions, afin d'assurer le bon fonctionnement des circuits électriques et des composants constituant lesdits circuits électriques. En effet, des surtensions appliquées entre deux bornes d'un circuit électrique peuvent occasionner la destruction de celui-ci. Les surtensions proviennent généralement de décharges électrostatiques propres à être appliquées aux bornes du circuit électrique.

Dans le domaine de la protection contre les surtensions, il est connu d'utiliser des composants tels que des résistances non linéaire ou des diodes Zener. Les diodes Zener correspondent plus spécifiquement à des diodes Zener de puissance, dont la puissance nominale est par exemple supérieure à 10 W.

La résistance non linéaire, lorsqu'elle est par exemple connectée en parallèle d'un circuit à protéger contre les surtensions, permet de dissiper l'énergie due à la surtension, tout en limitant la tension aux bornes dudit circuit. Cependant, la limitation en tension, également appelée écrêtage en tension, offerte par la résistance non linéaire est limitée.

La diode Zener de puissance a un très bon pouvoir d'écrêtage en tension et permet donc de limiter la tension aux bornes du circuit à protéger contre les surtensions. Cependant, la capacité de la diode Zener de puissance à dissiper le surplus d'énergie dû à la surtension est très limitée, ce qui peut conduire à la destruction de la diode Zener de puissance dans le cas d'apparition d'une surtension.

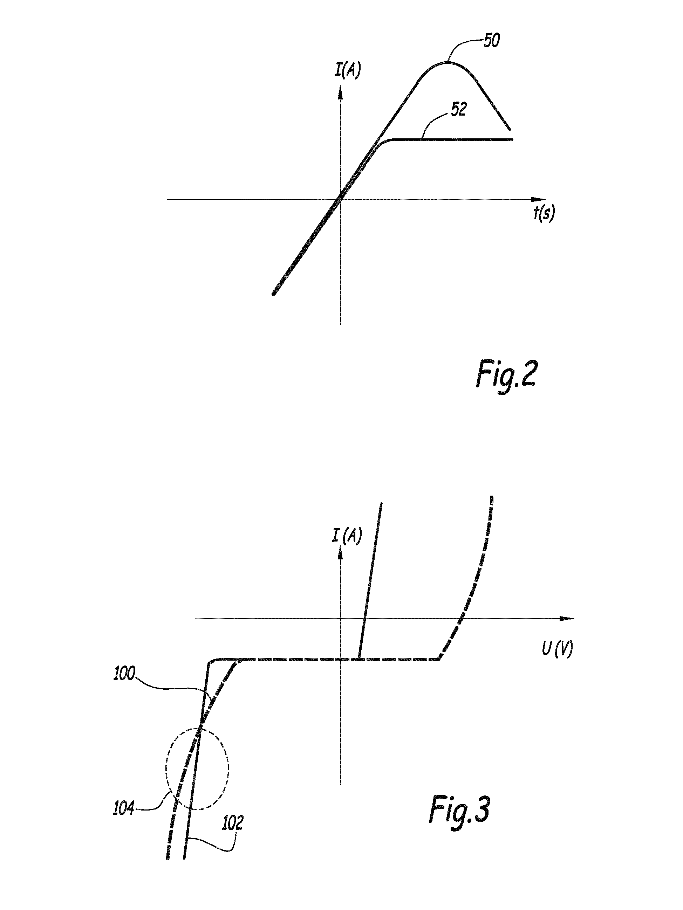

A la figure 3, le graphique montre une caractéristique courant-tension de la résistance non linéaire sur une courbe 100 et une caractéristique courant-tension de la diode Zener de puissance sur une courbe 102. Les courbes 100, 102 illustrent la capacité limitée d'écrêtage en tension de la résistance non linéaire et montrent que la diode Zener de puissance a une meilleure capacité d'écrêtage en tension que la résistance non linéaire. En effet, pour les courants négatifs, au niveau de la zone 104 de conduction de la résistance non linéaire et de la diode Zener de puissance, la pente de la courbe 102 est plus importante que la pente de la courbe 100.

Il est également connu d'utiliser un dispositif comprenant une diode Zener de puissance connectée en parallèle d'une résistance non linéaire. La diode Zener de puissance étant alors branchée aux bornes d'un circuit électrique à protéger contre les surtensions. Cependant, dans un tel dispositif, lorsque la tension aux bornes de la résistance non linéaire augmente de manière importante à cause d'une surtension, la tension aux bornes de la diode Zener de puissance augmente fortement également, ce qui conduit à la destruction de la diode Zener de puissance. De plus, dans ce type de dispositif, une première valeur de tension nominale choisie pour la diode Zener de puissance dépend d'une deuxième valeur de tension nominale choisie pour la résistance non linéaire.

Le but de l'invention est donc de proposer un dispositif de protection d'un circuit contre des surtensions, et permettant d'améliorer la dissipation d'un surplus d'énergie lié à l'apparition d'une surtension, ainsi que l'écrêtage de la tension aux bornes du circuit.

A cet effet, l'invention a pour objet un dispositif de protection d'un circuit contre des surtensions, le dispositif comprenant une résistance non linéaire et une diode Zener, la résistance non linéaire étant destinée à être connectée aux bornes d'une source d'alimentation électrique du circuit, la diode Zener et la résistance non linéaire comprenant chacune une première extrémité de connexion et une deuxième extrémité de connexion, la première extrémité de la diode Zener étant connectée à la première extrémité de la résistance non linéaire. Conformément à l'invention, le dispositif comprend en outre un composant limiteur de courant, propre à limiter l'intensité d'un courant le traversant, le composant limiteur de courant étant connecté entre la deuxième extrémité de la résistance non linéaire et la deuxième extrémité de la diode Zener.

Grâce à l'invention, lors de l'apparition d'une surtension, l'intensité du courant en sortie du composant limiteur de courant est limitée, ce qui permet de limiter l'intensité du courant traversant la diode Zener, par exemple en dessous d'une valeur d'intensité au-delà de laquelle la diode Zener risque d'être détruite. Ainsi, lors de l'apparition de la surtension, un pic de courant apparait et le composant limiteur de courant est traversé par une partie du courant, tandis qu'il bloque une autre partie du courant qui traverse la résistance non linéaire. La résistance non linéaire est alors apte à dissiper le surplus d'énergie lié à la surtension. En outre, la diode Zener a un très fort pouvoir d'écrêtage de la tension, ce qui permet de bien protéger le circuit contre la surtension. Le dispositif proposé permet donc de mieux protéger le circuit contre des surtensions tout en évitant la destruction de la diode Zener.

Selon d'autres aspects avantageux de l'invention, le dispositif de protection comprend en outre une ou plusieurs des caractéristiques suivantes, prises isolément ou selon toutes les combinaisons techniquement admissibles :
- La diode Zener est connectée aux bornes du circuit.
- Le composant limiteur de courant comprend un transistor à effet de champ tel qu'un transistor JFET ou un transistor MOS.
- Le transistor à effet de champ comporte un substrat semi-conducteur fabriqué en un matériau à large bande interdite, correspondant à du silicium ou du carbure de silicium.
- Le transistor à effet de champ est un transistor VJFET (de l'anglais Vertical junction FET) dont le substrat est en carbure de silice.
- La diode Zener est une diode Transil.
- La résistance non linéaire est une varistance.
- La tension nominale de la résistance non linéaire est supérieure à la tension délivrée par la source d'alimentation électrique, de préférence au moins 1,5 fois supérieure, à ladite tension délivrée par la source d'alimentation.
- Le composant limiteur de courant est propre à limiter l'intensité du courant le traversant à une valeur inférieure ou égale à une valeur seuil, et la diode Zener est apte à être traversée par un courant dont l'intensité est supérieure ou égale à ladite valeur seuil.

L'invention a également pour objet un organe d'alimentation électrique comprenant une source d'alimentation électrique et un dispositif de protection d'un circuit contre des surtensions. Conformément à l'invention, le dispositif de protection est tel que défini ci-dessus et la résistance non linéaire est connectée aux bornes de la source d'alimentation électrique.

L'invention sera mieux comprise et d'autres avantages de celle-ci apparaitront à la lumière de la description qui va suivre, donnée uniquement à titre d'exemple non limitatif, et faite en se référant aux dessins sur lesquels :
- la figure 1 est une représentation schématique d'un système électrique comprenant un dispositif de protection conforme à l'invention, connecté à un circuit électrique à protéger contre des surtensions ;
- la figure 2 est un ensemble de deux courbes représentant, lors de l'apparition d'une surtension, le courant en fonction du temps, en entrée et respectivement en sortie d'un composant limiteur de courant appartenant au dispositif de protection de la figure 1 ;
- la figure 3 est un ensemble de deux courbes représentant la caractéristique courant-tension d'une diode Zener et respectivement d'une résistance non linéaire.

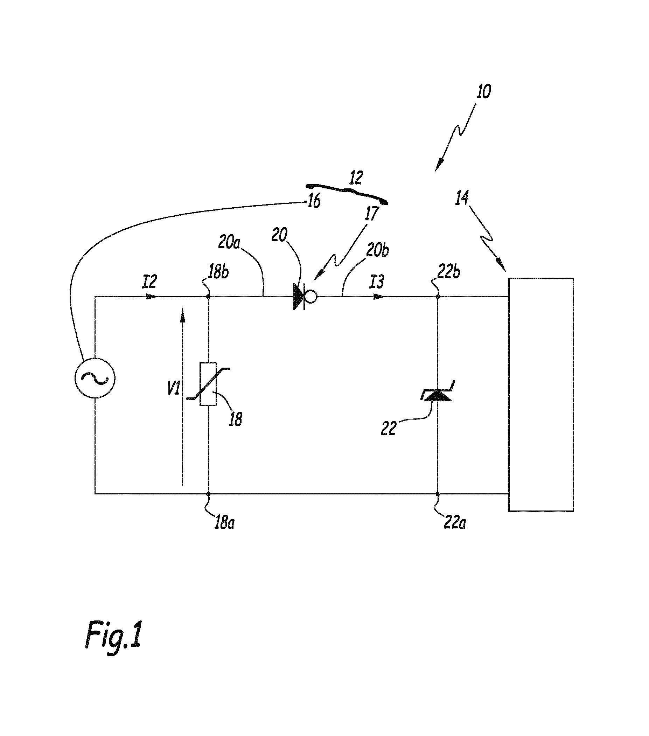

Sur la figure 1, un système électrique 10 comprend un organe d'alimentation électrique 12 et un circuit électrique 14 à protéger contre des surtensions.

L'organe d'alimentation électrique 12 comprend une source d'alimentation électrique 16 et un dispositif de protection 17.

La source d'alimentation électrique 16 est une source d'alimentation en tension. La source d'alimentation électrique 16 est adaptée pour fournir une tension V1 propre à être appliquée aux bornes du circuit 14 sans l'endommager. La tension V1 est généralement comprise entre 24 Volts (V) et 1500 V, de préférence entre 24 V et 1000 V.

Le dispositif de protection 17 comprend une résistance non linéaire 18, un composant limiteur de courant 20 et une diode Zener 22. La diode Zener 22 correspond généralement à une diode Zener de puissance dont la puissance nominale est, par exemple, supérieure à 10W.

La résistance non linéaire 18 est connectée aux bornes de la source d'alimentation électrique 16, c'est-à-dire en parallèle de la source d'alimentation électrique 16. La résistance non linéaire 18 est de préférence une varistance.

La résistance non linéaire 18 comprend une première extrémité de connexion 18a et une deuxième extrémité de connexion 18b.

La résistance non linéaire 18 a une tension nominale Vn supérieure à la tension V1 délivrée par la source d'alimentation électrique 16. La tension nominale Vn correspond à la tension aux bornes de la résistance non linéaire lorsqu'elle est traversée par un courant égal à 1 mA. De préférence, la tension nominale Vn est au moins 1,5 fois supérieure à la tension V1 délivrée par la source d'alimentation électrique 16. Ainsi, si la tension V1 est égale à 100 V, la tension nominale Vn est par exemple égale à 150 V.

Le composant limiteur de courant 20 comprend une première extrémité de connexion 20a et une deuxième extrémité de connexion 20b. La première extrémité 20a du composant limiteur 20 est connectée à la deuxième extrémité 18b de la résistance non linéaire 18.

Le composant limiteur de courant 20 est propre à limiter l'intensité d'un courant le traversant et ainsi à limiter l'intensité du courant transmis au niveau de la deuxième extrémité de connexion 20b.

Le composant limiteur de courant 20 est propre à limiter l'intensité du courant le traversant à une valeur inférieure ou égale à une valeur seuil S1. Plus précisément, lorsqu'un courant dont l'intensité est supérieure à la valeur seuil S1 arrive en entrée du composant limiteur de courant 20, le composant 20 est propre à limiter l'intensité du courant le traversant à la valeur seuil S1. La valeur seuil S1 est généralement choisie de manière à ce que l'intensité du courant traversant la deuxième extrémité 20b soit inférieure ou égale à une intensité maximale Imax acceptable par le circuit 14. L'intensité maximale Imax correspond à l'intensité maximale d'un courant propre à traverser le circuit 14 sans le détériorer ou altérer son fonctionnement. La valeur seuil S1 est par exemple comprise entre 5 A et 200 A.

Le composant limiteur de courant 20 comprend un transistor, non représenté, à effet de champ tel qu'un transistor à effet de champ à jonction (*en anglais Junction Field Effect Transistor-JFET*) ou un transistor à effet de champ à grille métal-oxyde (*en anglais Metal Oxyde Silicon Field Effect Transistor-MOSFET*).

Le transistor comprend un substrat semi-conducteur fabriqué en un matériau à large bande interdite correspondant, par exemple, à du silicium ou du carbure de silicium.

De préférence, le transistor à effet de champ est un transistor à effet de champ à jonction (JFET), encore appelé un transistor à effet de champ par jonction de type grille (*en anglais Junction Gate Field Effect Transistor*).

De manière encore préférée, le transistor à effet de champ est un transistor à effet de champ à jonction verticale (*en anglais Vertical Junction Field Effect Transistor-VJFET*), dont le substrat est un carbure de silice.

Le composant limiteur de courant 20 est tel que décrit dans la demande de brevet FR-A1-2975542. Ainsi, le transistor comprend une électrode de drain, une électrode de source et une électrode de grille.

En variante, le composant limiteur de courant 20 comprend un transistor bipolaire, tel qu'un transistor bipolaire à grille isolée (*en anglais Insulated Gate Bipolar Transistor* - *IGBT*) ou tout autre type de composant propre à limiter, c'est-à-dire à écrêter, le courant le traversant. La diode Zener 22 comprend une première extrémité de connexion 22a et une deuxième extrémité de connexion 22b. La diode Zener 22 est connectée aux bornes du circuit 14, c'est-à-dire en parallèle du circuit 14.

La première extrémité 22a est connectée à la première extrémité 18a. La deuxième extrémité 22b de la diode Zener est connectée à la deuxième extrémité 20b du composant limiteur de courant 20.

Le composant limiteur de courant 20 est ainsi connecté entre la deuxième extrémité 18b de la résistance non linéaire 18 et la deuxième extrémité 22b de la diode Zener 22. Plus précisément, l'électrode de source est connectée à la deuxième extrémité 18b de la résistance non linéaire 18, l'électrode de drain est connectée à la deuxième extrémité 22b de la diode Zener 22, et l'électrode de grille est connectée à un organe de commande, non représenté, propre à fixer la valeur seuil S1 à une valeur prédéterminée.

La diode Zener 22 est de préférence une diode Transil.

La diode Zener 22 est propre à être traversée par un premier courant I1 dont l'intensité est supérieure ou égale à ladite valeur seuil S1. Les valeurs du premier courant I1 et du seuil S1 sont spécifiques au circuit 14 à protéger et aux courants et tensions nominaux le traversant.

En variante, la diode Zener 22 est généralement propre à être traversée par le premier courant I1 dont l'intensité est supérieure à la différence entre la valeur seuil S1 et l'intensité d'un courant nominal In propre à traverser le circuit 14. Le courant nominal In correspond au courant nécessaire pour un fonctionnement optimal du circuit 14.

Lors d'un fonctionnement normal du circuit 14 et de la source d'alimentation 16, c'est-à-dire lorsqu'aucune surtension n'apparait, le composant limiteur 20 ne limite pas le courant le traversant et la source d'alimentation 16 délivre directement sa tension V1 au circuit 14, puisque le courant traversant la résistance non linéaire 18 et la diode Zener 22 est très faible et peut être considéré comme nul.

A la figure 2, une courbe 50 montre un deuxième courant I2 en fonction du temps mesuré au niveau de la source d'alimentation électrique 16, lors de l'apparition d'une surtension, et une courbe 52 montre un troisième courant I3 en fonction du temps mesuré au niveau de la deuxième borne 20b du composant limiteur de courant 20, lors de l'apparition de la surtension.

La courbe 50 montre que lors de l'apparition de la surtension, le courant au niveau de la source d'alimentation électrique 16 augmente fortement. La courbe 52 montre que, lors de l'apparition de la surtension, le courant mesuré au niveau de la deuxième borne 20b atteint la valeur seuil S1. Ainsi, le courant arrivant au niveau de la deuxième extrémité 22b de la diode Zener 22 et du circuit 14 est limité à la valeur seuil S1, et de ce fait, le courant traversant la diode Zener 22 et le circuit 14 n'influent pas de manière négative sur leur fonctionnement.

En effet, la valeur seuil S1 est choisie afin d'être inférieure ou égale à l'intensité du premier courant I1 propre à traverser la diode Zener 22. De plus, la valeur seuil S1 est généralement choisie afin d'être supérieure à l'intensité du courant nominal In propre à traverser le circuit 14. Ainsi, le composant limiteur de courant 20 limite le courant le traversant uniquement lorsqu'un pic de courant correspondant à une surtension apparait.

Lors de l'apparition d'une surtension, le courant traversant le composant limiteur 20 étant limité à la valeur seuil S1, la résistance non linéaire 18 est traversée par un courant correspondant à un courant restant Ir, qui est bloqué par le composant limiteur de courant 20 et ne le traverse pas. Le courant restant Ir correspond à la différence entre l'amplitude de la courbe 50 et la valeur seuil S1, lorsque la courbe 50 a une amplitude supérieure à la courbe 52. La résistance non linéaire 18 permet de dissiper l'énergie correspondant au courant restant Ir, c'est-à-dire de dissiper l'énergie liée à la surtension.

De plus la diode Zener 22 permet d'optimiser l'écrêtage de la tension aux bornes du circuit 14.

Ainsi, le dispositif 17 permet à la fois un écrêtage optimisé de la tension aux bornes du circuit 14, et une bonne dissipation de l'énergie liée à la surtension grâce à la résistance non linéaire 18.

En outre, la résistance non linéaire 18 a une fonction de dissipation de l'énergie et non d'écrêtage de la tension. Ainsi, la valeur de la tension nominale Vn de la résistance non linéaire 18 est propre à être supérieure à la tension V1, délivrée par la source d'alimentation électrique 16. Plus précisément la tension nominale Vn est au moins 1,5 fois supérieure à la tension V1 comme expliqué précédemment. Ceci implique qu'un courant important traverse la résistance non linéaire 18 uniquement lorsque la surtension créée un courant supérieur au seuil S1, et pas dès que la tension au bornes de la source d'alimentation 16 est légèrement supérieure à la tension V1, par exemple 1,2 fois supérieure. Ainsi, la durée de vie de la résistance non linéaire 18 est optimisée.

## Revendications

1. Dispositif de protection (17) d'un circuit (14) contre des surtensions, le dispositif (17) comprenant une résistance non linéaire (18) et une diode Zener (22), la résistance non linéaire (18) étant destinée à être connectée aux bornes d'une source d'alimentation électrique (16) du circuit (14), la diode Zener (22) et la résistance non linéaire (18) comprenant chacune une première extrémité de connexion (18a, 22a) et une deuxième extrémité de connexion (18b, 22b), la première extrémité (22a) de la diode Zener étant connectée à la première extrémité (18a) de la résistance non linéaire,
**caractérisé en ce que** le dispositif comprend en outre un composant (20) limiteur de courant, propre à limiter l'intensité d'un courant le traversant, le composant limiteur de courant (20) étant connecté entre la deuxième extrémité (18b) de la résistance non linéaire et la deuxième extrémité (22b) de la diode Zener.

2. Dispositif selon la revendication 1, **caractérisé en ce que** la diode Zener (22) est connectée aux bornes du circuit (14).

3. Dispositif selon l'une des revendications précédentes, **caractérisé en ce que** le composant limiteur de courant (20) comprend un transistor à effet de champ tel qu'un transistor JFET ou un transistor MOS.

4. Dispositif selon la revendication 3, **caractérisé en ce que** le transistor à effet de champ comporte un substrat semi-conducteur fabriqué en un matériau à large bande interdite, correspondant à du silicium ou du carbure de silicium.

5. Dispositif selon la revendication 3 ou 4, **caractérisé en ce que** le transistor à effet de champ est un transistor VJFET (de l'anglais Vertical junction FET) dont le substrat est en carbure de silice.

6. Dispositif selon l'une des revendications précédentes, **caractérisé en ce que** la diode Zener (22) est une diode Transil.

7. Dispositif selon l'une des revendications précédentes, **caractérisé en ce que** la résistance non linéaire (18) est une varistance.

8. Dispositif selon l'une des revendications précédentes, **caractérisé en ce que** la tension nominale (Vn) de la résistance non linéaire (18) est supérieure à la tension (V1) délivrée par la source d'alimentation électrique (16), de préférence au moins 1,5 fois supérieure, à ladite tension (V1) délivrée par la source d'alimentation (16).

9. Dispositif selon l'une des revendications précédentes, **caractérisé en ce que** le composant limiteur de courant (20) est propre à limiter l'intensité du courant le traversant à une valeur inférieure ou égale à une valeur seuil (S1), et **en ce que** la diode Zener (22) est apte à être traversée par un courant (I1) dont l'intensité est supérieure ou égale à ladite valeur seuil (S1).

10. Organe (12) d'alimentation électrique comprenant une source d'alimentation électrique (16) et un dispositif (17) de protection d'un circuit contre des surtensions,
**caractérisé en ce que** le dispositif (17) est conforme à l'une des revendications précédentes, et la résistance non linéaire (18) est connectée aux bornes de la source d'alimentation électrique.
